**Europäisches Patentamt**

**European Patent Office**

**Office européen des brevets**

(11) Veröffentlichungsnummer: **0 052 741 B1**

(12) **EUROPÄISCHE PATENTSCHRIFT**

(45) Veröffentlichungstag der Patentschrift:
14.03.84

(51) Int. Cl.³: **C 01 G 49/06, H 01 F 1/11**

(21) Anmeldenummer: **81108208.0**

(22) Anmeldetag: **12.10.81**

(54) Verfahren zur Herstellung von hochkoerzitivem nadelförmigem Gamma-Eisen(III)oxid.

(30) Priorität: **25.11.80 DE 3044340**

(43) Veröffentlichungstag der Anmeldung:
**02.06.82 Patentblatt 82/22**

(45) Bekanntmachung des Hinweises auf die Patenterteilung:
**14.03.84 Patentblatt 84/11**

(84) Benannte Vertragsstaaten:
**DE FR GB IT NL**

(56) Entgegenhaltungen:
EP - A - 0 001 435
EP - A - 0 014 302
DE - A - 2 461 937
DE - B - 1 249 242
FR - A - 2 274 562

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Ohlinger, Manfred, Dr., Anselm-Feuerbach-Strasse 13, D-6710 Frankenthal (DE)**
Erfinder: **Reichert, Hans, Dr., BASF Japan Ltd. 25 Yamatecho, Naka-Ku, Yokohama City (JP)**
Erfinder: **Vaeth, Guenter, Woogstrasse 35, D-6703 Limburgerhof (DE)**
Erfinder: **Faulhaber, Friedrich Richard, Dr., Ostpreussenstrasse 3, D-6704 Mutterstadt (DE)**
Erfinder: **Autzen, Horst, Dr., Hinter den Ruestern 20, D-6713 Freinsheim (DE)**
Erfinder: **Rudolf, Peter, Dr., Wiesenstrasse 1, D-6701 Neuhofen (DE)**
Erfinder: **Werther, Joachim, Dr., Im Winkel 10, D-6719 Weisenheim (DE)**

# 0 052 741

## Verfahren zur Herstellung von hochkoerzitivem nadelförmigem Gamma-Eisen(III)oxid

Die Erfindung betrifft ein Verfahren zur Herstellung von hochkoerzitivem nadelförmigem Gamma-Eisen(III)oxid durch Reduktion von nadelförmigem Eisen(III)oxidhydroxid bei Temperaturen zwischen 190 und 700°C mittels eines Gasgemisches aus einem Inertgas und einer bei Temperaturen oberhalb von 250°C in Gegenwart von Eisenoxid zersetzlichen organischen Substanz zum Magnetit und anschließender Oxidation des Magnetits mit sauerstoffhaltigen Gasen bei 150 bis 400°C zum Gamma-Eisen(III)oxid.

Nadelförmiges ferrimagnetisches Gamma-Eisen(III)oxid wird seit langem in großem Umfang als magnetisierbares Material bei der Herstellung von magnetischen Aufzeichnungsträgern eingesetzt. Zur Herstellung sind bereits eine Vielzahl von Verfahren bekanntgeworden. So beschreibt bereits die GB-PS 675 260 ein Verfahren zur Gewinnung von Gamma-Eisen(III)oxid, bei welchem nadelförmiges $\alpha$-Eisenoxidhydroxid (Goethit) zum $\alpha$-Eisen(III)oxid entwässert, in reduzierender Atmosphäre bei mehr als 300°C zum Magnetit umgewandelt und an Luft bei Temperaturen unterhalb 450°C zum nadelförmigen Gamma-Eisen(III)oxid oxidiert wird. Üblicherweise werden bei der Entwässerung der Eisenoxidhydroxide wie auch bei der nachfolgenden Reduktion zum Magnetit Temperaturen von mehr als 300°C erforderlich, welche ein unerwünschtes Sintern der Nadeln zu gröberen Teilchen bewirken. Dies macht sich in einem Abfall der Koerzitivfeldstärke und damit bei den elektroakustischen Eigenschaften bemerkbar. Aber auch wenn die Entwässerung bei Temperaturen von unterhalb 200°C durchgeführt wird, wie in der DE-OS 2 461 937 beschrieben, so bringen die anschließend nötigen hohen Temperaturen dennoch die vorgenannten Nachteile.

Nach einer in der DE-PS 801 352 offenbarten Verfahrensweise werden die unmagnetischen Eisenoxide durch Behandeln mit Salzen kurzkettiger Carbonsäuren und anschließendem Erhitzen in Magnetit überführt, der daraufhin bei 200 bis 400°C zum Gamma-Eisen(III)oxid oxidiert wird. Durch die US-PS 2 900 236 ist bekanntgeworden, daß sämtliche organische Verbindungen, welche bei Temperaturen unterhalb 540°C unter geringer Teer- und Aschebildung zersetzlich sind, sich für die Reduktion der unmagnetischen Eisenoxide zum Magnetit eignen. Dazu wird das Eisenoxid mit der gasförmigen, festen oder flüssigen organischen Substanz in Kontakt gebracht und auf eine Temperatur von 540 bis 650°C erhitzt. Während die US-PS 2 900 236 alle entsprechenden organischen Substanzen unter besonderer Nennung von Wachs, Stärke und Öl hierfür als brauchbar angibt, werden in der DE-AS 1 203 656 auf das Eisenoxid aufgefällte Salze löslicher Seifen und in der DD-PS 91 017 langkettige Carbonsäuren bzw. deren Salze angeführt. Gemäß einem in der DE-AS 1 771 327 beschriebenen Verfahren werden aliphatische Monocarbonsäuren mit 8 bis 25 Kohlenstoffatomen gegebenenfalls in Mischung mit Morpholin bereits zur Eisenoxidhydroxid-Suspension noch vor der weiteren Verarbeitung zugemischt. Demgegenüber werden nach der JP-OS 80 499/1975 bei Raumtemperatur flüssige organische Verbindungen mit niedrigem Siedepunkt, wie z. B. Ethanol, enthaltende Inertgase als gasförmiges Reduktionsmittel erst bei der Reduktion der unmagnetischen Eisenoxide zum Magnetit eingesetzt. Die DE-OS 2 064 804 beschreibt ein Verfahren zur Herstellung von magnetischem Eisenoxid, wobei unmagnetische Eisenoxide mit organischen Verbindungen wie höhere Kohlenwasserstoffe, höhere Amine, höhere Fettsäuren und deren Salze, Öl, Fett oder Wachs erhitzt werden, und das Erzeugnis im Bedarfsfall reoxidiert wird. Die Zugabe der organischen Verbindungen zum unmagnetischen Eisenoxid vor dem Erhitzen kann durch dessen Tränken oder Beschichten erfolgen. In der DE-OS 2 805 405, einem Verfahren zur Vortemperung von Lepidokrokit $\gamma$-FeOOH vor der Reduktion zu $Fe_3O_4$, werden als für die Reduktion geeignete organische Stoffe die an sich bekannten angegeben. Die aus der Vortemperung von Lepidokrokit entstandenen Produkte können dabei sowohl mechanisch mit den organischen Stoffen vermischt als auch in geeigneter Lösung oder Suspension damit überzogen sowie gasförmig zusammen mit einem Inertgas eingesetzt werden. Eine besondere Ausführungsform hierzu ist in der EP-A-0 014 302 beschrieben, bei der die Reduktion mittels eines überhitzten Dampfgemisches, erhalten beim Durchleiten eines Inertgasstromes durch einen mit der auf über 250°C aufgeheizten organischen Verbindung gefüllten Behälter, durchgeführt wird.

Alle diese Verfahren konnten jedoch nicht immer voll befriedigen. Werden die Eisenoxidhydroxidsuspensionen mit den flüssigen oder gelösten organischen Substanzen in Kontakt gebracht, so bilden sich hydrophobe Materialien, bei denen das erforderliche Auswaschen der anorganischen Salze nach der Reduktion stark erschwert ist. Diese anorganischen Salze können allerdings die Bildung hochwertiger Gamma-Eisen(III)oxide beeinträchtigen. Aber auch das Mischen der trockenen Substanzen führt zu ungenügenden Ergebnissen, da eine ausreichend homogene Mischung der im Verhältnis zum Eisenoxid oder -oxidhydroxid geringen Mengen an organischer Substanz mit dem nach dem Trocknen stark agglomerierten Pigment nur schwer zu erreichen ist. Daraus ergeben sich uneinheitliche Endprodukte. Wird demgegenüber die Reduktion der unmagnetischen Eisenoxide oder -oxidhydroxide zum Magnetit in der bereits vorgeschlagenen Weise mittels bei Raumtemperatur flüssiger organischer Verbindungen mit niedrigem Siedepunkt, welche dampfförmig oder in Mischung mit Inertgasen eingesetzt werden, durchgeführt, so treten bei den gegebenen Reaktionstemperaturen von 300°C und mehr ebenfalls die schon bei Verwendung der üblichen reduzierenden Gase, wie Wasserstoff oder Kohlenmonoxid, bekannten und unerwünschten Sinterungen der feinteiligen Materialien auf, welche

2

die magnetischen Eigenschaften ungünstig beeinflussen.

Der Erfindung lag somit die Aufgabe zugrunde, ein Verfahren bereitzustellen, mit welchem, ausgehend von Eisen(III)oxidhydroxid, die im Rahmen der Herstellung von nadelförmigem Gamma-Eisen(III)oxid auftretende Sinterprozesse vermieden werden und welche ein reines Gamma-Eisen(III)oxid hoher Koerzitivfeldstärke ergibt.

Es wurde nun überraschenderweise gefunden, daß sich nadelförmige Gamma-Eisen(III)oxide durch Reduktion eines durch Entwässern von nadelförmigem Eisen(III)oxidhydroxid bei 190 bis 250°C erhaltenen Eisen(III)oxids beim kontinuierlichen Durchleiten durch einen Ofen mit mindestens zwei Heizzonen mit Temperaturen zwischen 190 und 700°C mittels eines Gasgemisches aus einem Inertgas und einer bei Temperaturen oberhalb von 250°C in Gegenwart von Eisenoxid zersetzlichen organischen Substanz bei Temperaturen zwischen 300 und 700°C zum Magnetit mit sauerstoffhaltigen Gasen bei 150 bis 400°C gemäß der Aufgabe herstellen lassen, wenn das als Reduktionsmittel wirkende Gasgemisch bekanntermaßen mittels Durchleiten eines auf mehr als 250°C aufgeheizten Inertgasstromes durch die in einem geschlossenen Behälter auf Temperaturen von ebenfalls mehr als 250°C erhitzte oganische Substanz erzeugt wird und das Gasgemisch dann beim Einleiten in den Ofen zuerst mit dem in der ersten Heizzone des Ofens bei einer Temperatur zwischen 190 und 250°C aus dem Eisen(III)oxidhydroxid durch Wasserabspaltung entstehenden α-Eisen(III)oxid in Kontakt gebracht wird.

Bei der Durchführung des erfindungsgemäßen Verfahrens hat es sich als vorteilhaft herausgestellt, wenn das Gasgemisch auf ein Volumenteil an organischer Substanz $2.10^2$ bis $5.10^3$ Volumenteile an Inertgas aufweist. Die in diesem Gasgemisch enthaltenen und als Reduktionsmittel wirkenden organischen Substanzen haben einen Kochpunkt von über 250°C und bevorzugt eine Oberflächenspannung zwischen 27 und 30 dyn/cm, gemessen bei 90°C, und eine Dielektrizitätskonstante von 2,2 bis 2,6. Insbesondere werden für das erfindungsgemäße Verfahren Stearinsäure, Ölsäure, Sojalecithin oder Palmitinsäure sowie Gemische davon eingesetzt. Die für das Verfahren verwendeten nadelförmigen Eisen(III)oxidhydroxide sind synthetischer Goethit oder Lepidokrokit sowie gemeinsame Ausfällungen der beiden.

Gemäß dem erfindungsgemäßen Verfahren werden die geeigneten organischen Substanzen oder deren Gemische in einem geschlossenen Behälter auf Temperaturen von größer 250°C, vorzugsweise 300°C, erhitzt und ebenfalls ein auf mindestens dieselbe Temperatur aufgeheizter Inertgasstrom, im allgemeinen Stickstoff, hindurchgeleitet. Über geheizte Zuleitungen wird dieses Gasgemisch dann in den kontinuierlichen, mindestens zwei, vorzugsweise drei Heizzonen aufweisenden Ofen, in dessen erste eine Temperatur zwischen 190 und 250°C aufweisende Heizzone das Eisen(III)oxidhydroxid gegebenenfalls mit einer Schnecke eingefördert wird, eingeleitet. In dieser ersten Heizzone wird einerseits durch eine entsprechende Temperaturführung und andererseits durch die zunächst stattfindende Entwässerung des Eisen(III)oxidhydroxids zum α-Eisen(III)oxid die Temperatur von höchstens 250°C nicht überschritten. Auf dem sich zu der ersten Heizzone somit bildenden wasserfreien α-Eisen(III)oxid mit einer Temperatur von kleiner 250°C kondensiert aus dem mit höherer Temperatur eintretenden Gasgemisch zumindest ein Teil der darin enthaltenen organischen Substanz und wird als monomolekulare Schicht an der Oberfläche der Teilchen adsorbiert. Das so mit organischer Substanz beaufschlagte α-Eisen(III)oxid wird dann im übrigen Ofenbereich in Gegenwart der aus restlicher organischer Substanz, Inertgas und Wasserdampf bestehenden Atmosphäre bei Temperaturen zwischen 300 und 700°C, vorzugsweise 300 bis 620°C, zum Magnetit reduziert, wobei oberflächlich auf den Nadeln verbleibender Kohlenstoff ein Sintern und Zusammenbacken der nadelförmigen Teilchen verhindert.

Die Zudosierung des Gasgemisches aus Inertgas und organischer Substanz geschieht in solchen Mengen, daß 0,5 bis 10, vorzugsweise 2 bis 6 Gewichtsprozent organische Substanz, bezogen auf die Menge an Eisen(III)oxidhydroxid vorhanden sind, während die mittlere Verweilzeit des Eisenoxids im Ofen 20 bis 150, vorzugsweise 30 bis 60 Minuten beträgt. Zur Durchführung des erfindungsgemäßen Verfahrens geeignete Öfen sind beispielsweise Drehrohröfen oder Klappenöfen sowie ähnliche Apparaturen, sofern sie in mindestens zwei, vorzugsweise drei Heizzonen mit weitgehend kontinuierlichem Materialfluß aufteilbar sind.

Der auf die geschilderte Weise entstandene Magnetit wird dann in bekannter Weise bei 150 bis 400, vorzugsweise 200 bis 280°C mit sauerstoffhaltigen Gasen, üblicherweise mit Luft zum Gamma-Eisen(III)oxid umgewandelt.

Das nach dem erfindungsgemäßen Verfahren erhältliche Gamma-Eisen(III)oxid zeichnet sich durch einen im Vergleich zu den eingesetzten Eisenoxiden hohen Formerhalt der einzelnen nadelförmigen Teilchen und vor allem durch eine hohe Koerzitivfeldstärke aus, welche Werte erreicht, die bei herkömmlicher Herstellung nur durch den Zusatz von Kobalt zu erhalten sind.

Diese erfindungsgemäß hergestellten Gamma-Eisen(III)oxide eignen sich deshalb in besonderer Weise zur Herstellung von magnetischen Aufzeichnungsträgern. Hierzu wird das magnetische Material in Lösungen polymerer Bindemittel dispergiert.

Als Bindemittel eignen sich die für diesen Zweck bekannten Verbindungen, wie Polyamide, Polyurethane, bzw. Mischungen von Polyisocyanaten und höher molekularen Polyhydroxylverbindungen und insbesondere Vinylchlorid-Polymerisate mit überwiegenden Mengen an Vinylchlorid-Copolymerisate mit Comonomeren, wie Vinylester von Monocarbonsäuren, Estern von aliphatischen Alkoholen

3

und ungesättigten Carbonsäuren, wie Acrylsäure, Methacrylsäure oder Maleinsäure, oder diesen Carbonsäuren selbst sowie hydroxylgruppenhaltige Vinylchlorid-Copolymerisate oder Acetate allein oder in Abmischungen. Die Magnetschicht kann zusätzlich noch vernetzt werden. Zur Dispergierung der magnetischen Materialien in der Bindemittellösung werden zweckmäßigerweise übliche Dispergiermittel wie beispielsweise Salze von Fettsäuren, Sojalecithin oder sonstige geeignete Stoffe in Mengen von 0,5 bis 6 Gewichtsprozent, bezogen auf die Einwaage des magnetischen Materials, zugegeben. Außerdem sind Zusätze wie Ester, Carbonsäuren oder Siliconöle in Mengen von 0,5 bis 10 Gewichtsprozent zur Verringerung des Reibungskoeffizienten der Magnetschicht üblich. Als weitere Zusatzstoffe können den Dispersionen auch Füllstoffe, wie Ruß, Graphit und/oder nicht magnetisierbare Pulver auf Silikatbasis in bekannter Weise zugesetzt werden. Nach dem Dispergieren erfolgt das Aufbringen der Dispersion mit bekannten Beschichtungseinrichtungen auf übliche Polyäthylenterephthalatfolien, wobei ein richtendes Magnetfeld zur Erzielung einer magnetischen Vorzugsrichtung angewendet wird. Nach dem Auftragen und Trocknen der Magnetschicht kann diese mit Vorteil an der Oberfläche vergütet, bzw. geglättet und die beschichtete Folie in den zur Herstellung von Magnetogrammträgern üblichen Maschinen in die gewünschte Bandbreite geschnitten werden.

Die Erfindung sei anhand folgender Beispiele und Vergleichsversuche näher erläutert.

Die magnetischen Pulverwerte werden durch Messung einer auf ein Stopfgewicht von $D = 1,2$ g/$cm^3$ gebrachten Oxidprobe mit einem konventionellen Schwingmagnetometer bei 100 kA/m Meßfeldstärke bestimmt. Die Koerzitivfeldstärke ($H_c$) wird in [kA/m], die spezifische Remanenz ($M_r/\rho$) und die spezifische Magnetisierung ($M_m/\rho$) werden in [nT · m³/g] angegeben. Ebenfalls mit einem Schwingmagnetometer werden die Magnetbandproben bei einer Feldstärke von 100 kA/m untersucht. Angegeben wird die Koerzitivfeldstärke $H_c$, der remanente Magnetisierung R in [mT] und der Richtfaktor RF, d. h. das Verhältnis der remanenten Magnetisierung längs zur Vorzugsrichtung zu der quer dazu. Die Messung der elektroakustischen Banddaten erfolgt nach DIN 45 512, Teil II gegen das Standardbezugsband T 308 S mit einem Vormagnetisierungsstrom von +2 dB. Die Kopierdämpfung $K_d$ ist auf das Bezugsband T 308 S bezogen, welches gleich 0 dB gesetzt wird.

### Beispiel 1

Durch einen in 3 Heizzonen unterteilten Drehrohrofen wird kontinuierlich Gamma-Eisen(III)oxid mit einer spezifischen Oberfläche nach BET von 32 m²/g und einer durchschnittlichen Nadellänge von 0,5 µm bei einem Längen-Dickenverhältnis von 12 : 1 in einer Menge von 20 kg pro Stunde gefördert. Gleichzeitig wird ein Stickstoffstrom von 30 m³/h durch einen Behälter, welcher mit auf 270°C aufgeheizter Stearinsäure gefüllt ist, und anschließend zusammen mit dem mittels Schnecke in den Drehrohrofen eingeförderten Pigment durch den Drehrohrofen geleitet. Im Ofen wird das Eisenoxid entsprechend den drei Heizzonen auf 230, 450 und zuletzt auf 620°C Produkttemperatur erhitzt. Die durch den Stickstoffstrom in den Drehrohrofen eingebrachte Menge an Stearinsäure beträgt 1 kg/h. Nach einer auf 45 Minuten eingestellten Verweilzeit fällt der Magnetit über eine Schleuse in einen zweiten Drehrohrofen, in welchem er bei einer mittleren Verweilzeit von ebenfalls 45 Minuten und bei einer Produkttemperatur von 250°C mittels eines Luftstroms zum Gamma-Eisen(III)oxid oxidiert wird. Die Meßergebnisse sind in Tabelle 1 angegeben.

### Beispiel 2

Es wird wie in Beispiel 1 beschrieben verfahren, jedoch wird anstelle der Stearinsäure ein handelsübliches Lecithin eingesetzt. Die Meßergebnisse sind in Tabelle 4 aufgeführt.

### Beispiel 3

Anstelle von Gamma-Eisen(III)oxid wird -Eisen(III)oxidhydroxid mit einer spezifischen Oberfläche nach BET von 33,5 m²/g, einer durchschnittlichen Nadellänge von 0,6 µm bei einem Längen-Dickenverhältnis von 15 : 1, in einer Menge von 20 kg pro Stunde gefördert. Gleichzeitig wird ein Stickstoffstrom von 30 m³/h durch einen Behälter, welcher mit auf 260°C aufgeheizter Palmitinsäure gefüllt ist, und anschließend zusammen mit dem mittels Schnecke in den Drehrohrofen eingeförderten Pigment durch den Drehrohrofen geleitet. Temperaturprofil und sonstige Verfahrensdaten entsprechen denen des Beispiels 1. Die Meßergebnisse sind in Tabelle 1 enthalten.

### Beispiel 4

Es wird wie in Beispiel 1 beschrieben verfahren, jedoch beträgt die durchgesetzte Menge Pigment 40 kg/h bei einem Temperaturprofil der Heizzonen 1, 2 und 3 von 220, 460 und 650°C Produkttempera-

**0 052 741**

tur. Die Meßergebnisse sind in Tabelle 1 enthalten.

## Vergleichsversuch 1

Das Eisenoxidhydroxid gemäß Beispiel 1 wird vor der weiteren Verarbeitung in einem üblichen Trommelmischer bei 30 Umdrehungen pro Minute eine Stunde lang mit 5 Gew.-% Stearinsäure gemischt. Diese Mischung wird in der bei Beispiel 1 beschriebenen Weise zum Gamma-Eisen(III)oxid umgewandelt, wobei jedoch der Stickstoffstrom direkt, d. h. ohne Stearinsäurebeladung dem Reduktionsofen zugeführt wird.
Die Ergebnisse am Endprodukt sind in Tabelle 1 enthalten.

## Vergleichsversuch 2

Es wird wie in Beispiel 1 beschrieben verfahren, jedoch werden 30 m³/h Stickstoff, welchem 10 m³/h überhitzter Ethanoldampf zugemischt werden, durch den Drehrohrofen gefördert.
Die Meßergebnisse sind in Tabelle 1 aufgeführt.

## Vergleichsversuch 3

Es wird wie in Vergleichsversuch 2 beschrieben verfahren, jedoch wird der Ethanoldampf durch die gleiche Menge Benzoldampf ersetzt.
Die Meßergebnisse am Endprodukt sind in Tabelle 1 aufgeführt.

## Vergleichsversuch 4

Es wird wie in Vergleichsversuch 2 beschrieben verfahren, jedoch wird der Ethanoldampf durch die gleiche Menge auf 260°C erhitzten Wasserstoffs ersetzt.
Die Meßergebnisse am Endprodukt sind in Tabelle 1 aufgeführt.

## Vergleichsversuch 5

Es wird wie in Vergleichsversuch 4 beschrieben verfahren, jedoch werden nur 25 m³/h auf 260°C erhitzter Wasserstoff ohne Stickstoffanteil eingeleitet.
Die Meßergebnisse am Endprodukt sind in Tabelle 1 aufgeführt.

## Vergleichsversuch 6

500 kg eines nadelförmigen Lepidokrokits analog Beispiel 1 werden in einem Drehrohrofen mit einer durchschnittlichen Produkttemperatur von 420°C und Einleitung eines auf 300°C vorgeheizten Stickstoffstroms von 20 m³/h innerhalb einer Stunde zu $\alpha$-Fe$_2$O$_3$ entwässert. Die anschließend durchgeführte Bestimmung der spezifischen Oberfläche nach BET ergibt 26,5 m²/g.
Dieses Produkt wird dann in einer Menge von 20 kg/h kontinuierlich einem in 3 Heizzonen unterteilten, auf 300, 420 und 650°C aufgeheizten Drehrohrofen zugeführt, wobei gleichzeitig ein Stickstoffstrom von 30 m³/h zunächst durch einen mit auf 270°C aufgeheizter, gefüllter Stearinsäure und dann mit dem Produkt durch den Ofen geleitet wird. Die durch den Stickstoffstrom eingebrachte Menge an Stearinsäure beträgt 1 kg/h. Nach einer auf 45 Minuten eingestellten Verweilzeit fällt das reduzierte Produkt, d. h. der Magnetit über eine Schleuse in einen zweiten Drehrohrofen, in welchem es bei einer mittleren Verweilzeit von ebenfalls 45 Minuten bei einer Produkttemperatur von 250°C mittels Luftstrom zu Gamma-Eisen(III)oxid oxidiert wird.
Die Meßergebnisse sind in Tabelle 1 enthalten.

## Vergleichsversuch 7

Ein nach Vergleichsversuch 1 hergestelltes Gamma-Eisen(III)oxid mit einer Koerzitivfeldstärke von 24,8 kA/m wird mit 1,5 Gew.-% Kobalt durch Auffällen einer Kobaltferritschicht gemäß der in der DE-OS 2 650 890 beschriebenen Arbeitsweise, in ein magnetisches Material mit einer Koerzitivfeldstärke von 29,5 kA/m umgewandelt.
Die übrigen Meßergebnisse sind in Tabelle 1 enthalten.

5

# 0 052 741

Tabelle 1

|  | Oberfläche nach BET (m²/g) | Hc | $M_r/\rho$ | $M_m/\rho$ |
|---|---|---|---|---|
| Beispiel 1 | 21,8 | 29,0 | 40,2 | 75,6 |
| Beispiel 2 | 22,2 | 29,3 | 40,3 | 76,4 |
| Beispiel 3 | 21,0 | 28,7 | 42,1 | 79,6 |
| Beispiel 4 | 20,6 | 29,5 | 39,8 | 74,9 |
| Vergleichsversuch 1 | 19,0 | 24,8 | 39,7 | 74,8 |
| Vergleichsversuch 2 | 18,2 | 24,0 | 38,9 | 74,2 |
| Vergleichsversuch 3 | 17,9 | 24,2 | 39,1 | 75,0 |
| Vergleichsversuch 4 | 16,1 | 24,9 | 37,6 | 72,3 |
| Vergleichsversuch 5 | 15,0 | 24,5 | 43,0 | 80,2 |
| Vergleichsversuch 6 | 23,2 | 27,9 | 41,7 | 78,1 |
| Vergleichsversuch 7 | 17,5 | 29,5 | 41,1 | 79,2 |

## Beispiele A bis L

Nach folgender Vorschrift werden die magnetischen Materialien gemäß den Beispielen 1 bis 4 und den Vergleichsversuchen 1 bis 7 zu Magnetbändern verarbeitet. Dazu werden in einer Stahlkugelmühle mit einem Füllvolumen von 20 000 Volumenteilen, die mit 50 Umdrehungen pro Minute betrieben wird, 20 000 Teile Stahlkugeln, 2700 Teile des entsprechenden magnetischen Materials, 67 Teile eines Dispergiermittels mit Betainstruktur, je 15 Teile eines Siliconöls und eines Dicarbongemisches mit 12 bis 19 C-Atomen, 400 Teile eines handelsüblichen isocyanatfreien Polyurethans aus Adipinsäure, Butandiol-1,4 und 4,4-Dicyanato-diphenyl-methan mit einem K-Wert von 63 (gemessen als 1%ige Lösung in Tetrahydrofuran) und 200 Teile eines PVC-Maleinsäureethylester-Copolymeren mit einem K-Wert von 59 (gemessen als 1%ige Lösung in Tetrahydrofuran) sowie 70 000 Teile eines Gemisches aus gleichen Teilen von Tetrahydrofuran und 1,4-Dioxan eingegeben, wobei die Eingabe der angegebenen Bindemittel in Form ihrer gemeinsamen Lösung in dem genannten Lösemittelgemisch erfolgt. Die Gesamtmischung wird in der Kugelmühle 5 Tage angerieben, bis eine ausreichende Oberflächenglätte eines Abstriches einer Dispersionsprobe festgestellt wird. Die so erhaltene Magnetdispersion wird dann durch eine Cellulose-Asbestfaser-Filterschicht filtriert und anschließend mit einer geeigneten Beschichtungseinrichtung auf eine Polyäthylenterephthalat-Folie von 12 µm Stärke in einer solchen Auftragsstärke gegossen, daß nach Trocknung in einem Trockenkanal und anschließendem Glättvorgang mit Mehrstraßenkalander auf einem Rv-Wert der Schicht von 0,12 µm, gemessen mit einem Meßgerät der Firma Perthen, Hannover, eine Schichtdicke von 4,5 µm verbleibt. Im Bereich der noch nassen Schicht des Trockenkanals befindet sich dabei ein über die gesamte Breite der Magnetschicht reichender Magnet, welcher die Magnetteilchen in die gewünschte Vorzugsrichtung dreht. Die so hergestellten Magnetbänder werden in 3,81 mm Breite geschnitten.

Tabelle 2

| Beispiel | Material von | Hc (kA/m) | R (mT) | Richtf. | Aussteuerbarkeit bei | | Kd (dB) |
|---|---|---|---|---|---|---|---|
| | | | | | 1 kHz (dB) | 10 kHz (dB) | |
| A | Beispiel 1 | 29,1 | 162 | 3,1 | +1,2 | +0,5 | +1,5 |
| B | Beispiel 2 | 29,4 | 158 | 2,9 | +0,8 | +0,2 | +1,0 |
| C | Beispiel 3 | 29,0 | 155 | 2,8 | +0,5 | +0,8 | +0,5 |
| D | Beispiel 4 | 29,6 | 152 | 2,8 | +1,0 | −0,5 | +2,5 |
| E | Vergleichsversuch 1 | 24,3 | 150 | 2,6 | +0,5 | −1,0 | −1,5 |
| F | Vergleichsversuch 2 | 24,5 | 136 | 2,2 | −1,5 | −0,8 | −1,0 |
| G | Vergleichsversuch 3 | 25,0 | 138 | 2,4 | −1,0 | −1,0 | −1,5 |
| H | Vergleichsversuch 4 | 25,2 | 124 | 2,1 | −2,0 | −1,5 | +0,5 |
| I | Vergleichsversuch 5 | 24,8 | 130 | 1,9 | −2,5 | −1,8 | +1,0 |
| K | Vergleichsversuch 6 | 28,2 | 140 | 2,5 | −1,5 | 0 | +1,0 |
| L | Vergleichsversuch 7 | 29,3 | 170 | 2,7 | +1,0 | +0,8 | −4,0 |
| Bezugsband T308S | | | | | +1,5 | −1,5 | 0 |

## Patentansprüche

1. Verfahren zur Herstellung von hochkoerzitivem nadelförmigem Gamma-Eisen(III)oxid durch Reduktion eines durch Entwässern von nadelförmigem Eisen(III)oxidhydroxid bei 190 bis 250°C erhalte-

6

nen Eisen(III)oxids beim kontinuierlichen Durchleiten durch einen Ofen mit mindestens zwei Heizzonen mit Temperaturen zwischen 190 und 700°C mittels eines Gasgemisches aus einem Inertgas und einer bei Temperaturen oberhalb von 250°C in Gegenwart von Eisenoxid zersetzlichen organischen Substanz mit einem Kochpunkt von über 250°C, bei Temperaturen zwischen 300 und 700°C zum Magnetit und anschließende Oxidation des Magnetits mit sauerstoffhaltigen Gasen bei 150 bis 400°C zum Gamma-Eisen(III)oxid, dadurch gekennzeichnet, daß das als Reduktionsmittel wirkende Gasgemisch bekanntermaßen mittels Durchleiten eines auf mehr als 250°C aufgeheizten Inertgasstromes durch die in einem geschlossenen Behälter auf Temperaturen von ebenfalls mehr als 250°C erhitzte organische Substanz erzeugt wird und das Gasgemisch dann beim Einleiten in den Ofen zuerst mit dem in der ersten Heizzone des Ofens bei einer Temperatur zwischen 190 und 250°C aus dem Eisen(III)oxidhydroxid durch Wasserabspaltung entstehenden $\alpha$-Eisen(III)oxid in Kontakt gebracht wird.

2. Verfahren gemäß Anspruch 1, dadurch gekennzeichnet, daß sich die Volumenverhältnisse von organischer Substanz zu Inertgas wie 1 zu $2 \cdot 10^2$ bis $5 \cdot 10^3$ verhalten.

3. Verfahren gemäß Anspruch 1, dadurch gekennzeichnet, daß die eingesetzte Menge an organischer Substanz 0,5 bis 10 Gew.-%, bezogen auf die Menge an unmagnetischem Eisen(III)oxidhydroxid, beträgt.

## Claims

1. A process for the preparation of highly coercive acicular gamma-iron(III) oxide by reducing iron(III) oxide, which has been obtained by dehydrating acicular iron(III) oxide hydroxide at from 190 to 250°C and is being passed continuously through a furnace having two or more heating zones at from 190 to 700°C, by means of a gaseous mixture of an inert gas and an organic substance which has a boiling point of more than 250°C and is decomposable at above 250°C in the presence of iron oxide, to give magnetite, the reduction to magnetite being effected at from 300 to 700°C, and then oxidizing the magnetite to gamma-iron(III) oxide with an oxygen-containing gas at from 150 to 400°C, wherein the gas mixture acting as the reducing agent is produced in a conventional manner by passing a stream of inert gas, heated to above 250°C, through an organic substance also heated to above 250°C in a closed vessel, and the gas mixture, on introduction into the furnace, is first brought into contact with the $\alpha$-iron(III) oxide formed from the iron(III) oxide hydroxide by elimination of water in the first heating zone of the furnace at from 190 to 250°C.

2. A process as claimed in claim 1, wherein the volumetric ratio of organic substance to inert gas is from $1 : 2 \cdot 10^2$ to $1 : 5 \cdot 10^3$.

3. A process as claimed in claim 1, wherein the amount of organic substance employed is from 0.5 to 10% by weight, based on the amount of non-magnetic iron(III) oxide hydroxide.

## Revendications

1. Procédé de préparation d'oxyde de fer(III)-$\gamma$, aciculaire, de coercivité élevée, par réduction en magnétite, à des températures comprises entre 300 et 700°C, d'un oxyde de fer(III), obtenu par déshydratation, de 190 à 250°C, d'hydrate d'oxyde de fer(III) aciculaire, par passage continu dans un four à au moins deux zones de chauffage, à des températures comprises entre 190° et 700°C, au moyen d'un mélange gazeux d'un gaz inerte et d'une substance organique d'un point d'ébullition supérieur à 250°C et décomposée à des températures supérieures à 250°C en présence d'oxyde de fer, puis oxydation en oxyde de fer(III)-$\gamma$, entre 150 et 400°C, de la magnétite avec des gaz oxygénés, caractérisé par le fait que le mélange gazeux, agissant comme réducteur, est produit, de façon connue en soi, par passage d'un courant de gaz inerte, chauffé à plus de 250°C, à travers la substance organique chauffée, dans un récipient fermé, à des températures également supérieures à 250°C, et le mélange gazeux est alors amené, par introduction dans le four, tout d'abord en contact avec l'oxyde de fer(III)-$\gamma$ généré dans la première zone de chauffe du four, à une température comprise entre 190° et 250°C, à partir de l'hydrate d'oxyde de fer(III) par séparation d'eau.

2. Procédé selon la revendication 1, caractérisé par le fait que le rapport en volume de la substance organique au gaz inerte est de $1/2 \cdot 10^2$ à $1/5 \cdot 10^3$.

3. Procédé selon la revendication 1, caractérisé par le fait que la quantité de substance organique introduite est de 0,5 à 10% en poids, rapportée à la quantité d'hydrate d'oxyde de fer(III) non magnétique.